# EUROPÄISCHE PATENTSCHRIFT

(11) **EP 4 050 171 B1**
(45) Veröffentlichungstag und Bekanntmachung des Hinweises auf die Patenterteilung: **26.04.2023**
(21) Anmeldenummer: 21158860.3
(22) Anmeldetag: 24.02.2021
(51) Int. Cl.: E04B 1/19, F16B 7/18, F16B 37/04, E04B 1/58, E04C 3/04, E04C 3/08

(54) **TRAGWERK SOWIE VERFAHREN ZUR HERSTELLUNG DESSELBEN**
SUPPORTING STRUCTURE AND METHOD FOR PRODUCING THE SAME
STRUCTURE DE SUPPORT ET SON PROCÉDÉ DE FABRICATION

(43) Veröffentlichungstag der Anmeldung: 31.08.2022
(73) Patentinhaber: Bouaouaja, Kamal, 8750 Judenburg (AT); Bouaouaja, Daniel Karim, 8753 Fohnsdorf (AT)
(72) Erfinder: Bouaouaja, Kamal, 8750 Judenburg (AT); Bouaouaja, Daniel Karim, 8753 Fohnsdorf (AT)
(74) Vertreter: Wirnsberger & Lerchbaum Patentanwälte OG

(56) Entgegenhaltungen:
- JP-A- H01 322 042
- JP-A- 2016 121 800
- US-B1- 10 316 508

## Beschreibung

Die Erfindung betrifft ein Tragwerk, aufweisend zumindest drei durch Hohlprofile gebildete Stäbe.

Darüber hinaus betrifft die Erfindung ein Verfahren zur Herstellung eines Tragwerkes, welches zumindest drei Stäbe, welche an einem Knotenpunkt über ein Verbindungselement durch Schraubverbindungen verbunden sind, aufweist.

Aus dem Stand der Technik sind Tragwerke und Verfahren zur Herstellung derselben hinlänglich bekannt geworden. In der Regel werden dabei Stäbe an Knotenpunkten verbunden, üblicherweise durch Schweißen, Nieten oder Schrauben.

Das Dokument JP H01 322042 A offenbart eine Verbindungsstruktur, welche ein Hohlprofil mit einem Stahlträger verbindet.

Das Dokument JP 2016 121800 A offenbart ein Verbindungselement, bei welchem Setzmuttern eingesetzt werden.

Das Dokument US 10,316,508 B1 offenbart die Verbindung mehrerer Hohlprofile unter Einsatz von Verbindungselementen, die in die Hohlprofile ragen.

Es hat sich jedoch gezeigt, dass bei aus dem Stand der Technik bekannten Verfahren nur eine geringe Effizienz erreicht wird und die Herstellung entsprechender Tragwerke daher nur mit großem Arbeitszeiteinsatz und damit mit hohen Kosten möglich ist.

Hier setzt die Erfindung an. Aufgabe der Erfindung ist es, ein Tragwerk der eingangs genannten Art anzugeben, welches die Nachteile des Standes der Technik vermeidet.

Ferner soll ein Verfahren zur Herstellung eines Tragwerkes der eingangs genannten Art angegeben werden, welches besonders effizient umsetzbar ist.

Die erste Aufgabe wird erfindungsgemäß durch ein Tragwerk nach Anspruch 1 gelöst.

Im Rahmen der Erfindung wurde erkannt, dass eine Effizienz bei der Herstellung entsprechender Tragwerke wesentlich erhöht werden kann, wenn Muttern vorab am Verbindungselement angeordnet werden. So kann ein Anordnen der Muttern an den Bohrungen automatisiert erfolgen und vorab, beispielsweise in einer Werkstätte, maschinell durchgeführt werden. Bei einer Montage des Tragwerkes vor Ort ist es somit lediglich noch erforderlich, entsprechende Schrauben durch Durchgangsbohrungen in den Stäben zu führen und diese Schrauben mit den am Basiselement angeordneten Muttern zu verbinden bzw. die Schrauben in die Gewinde der Muttern einzuschrauben. Dadurch entfällt ein Hantieren auf der Baustelle mit den Muttern unabhängig von den Verbindungselementen. Weiter kann auch auf Schweißen oder dergleichen verzichtet werden.

Die Muttern sind üblicherweise fest mit dem Verbindungselement verbunden, beispielsweise durch eine form-, kraft- und/oder stoffschlüssige Verbindung.

Der Begriff Mutter ist im Sinne dieser Anmeldung sehr allgemein als jeglicher Gegenstand zu verstehen, welcher ein Gewinde aufweist, in welches eine entsprechende Schraube eingeschraubt werden kann. Es ist somit beispielsweise nicht zwingend, dass die Mutter durch eine Sechskantmutter gebildet ist, wenngleich dies eine bevorzugte Ausführungsvariante sein kann.

Üblicherweise ist vorgesehen, dass Durchmesser der einzelnen Bohrungen geringer sind als Außendurchmesser der an den jeweiligen Bohrungen angeordneten Muttern. Die Muttern können sich dann am Basiselement um die Bohrung abstützen, sodass beispielsweise bei einer Verbindung von Stäben eines Tragwerkes mit dem Verbindungselement das Basiselement zwischen einem Stab und der Mutter angeordnet ist. Ein Schraubenkopf einer entsprechenden Schraube, welche durch den Stab und das Basiselement in die Mutter ragt, stützt sich folglich auf dem Stab, gegebenenfalls einer am Stab angeordneten Unterlegscheibe oder dergleichen ab.

In der Regel ist vorgesehen, dass Durchmesser der einzelnen Bohrungen größer sind als Innendurchmesser der an den jeweiligen Bohrungen angeordneten Muttern. Eine Schraube, die in der Mutter eingeschraubt werden soll, kann dann leicht durch die Bohrungen hindurchgeführt werden. Üblicherweise entspricht ein Durchmesser der Bohrungen etwa einem Nenndurchmesser einer Schraube, welche in die Mutter bestimmungsgemäß einschraubbar ist bzw. ist der Durchmesser der Bohrung geringfügig größer als dieser Nenndurchmesser, sodass die Schraube einfach in die Bohrung eingeführt werden kann, jedoch ein Flächenkontakt zwischen Mutter und Basiselement ausreichend groß ist, um unzulässig hohe Flächenpressungen zu vermeiden.

Besonders bevorzugt ist vorgesehen, dass die Muttern am Basiselement fluchtend mit den Bohrungen befestigt sind, insbesondere seitlich am Basiselement. Es wird dann bei entsprechender Wahl eines Durchmessers der Bohrung eine maximale Kontaktfläche zwischen Mutter und Basiselement erreicht, um eine robuste Verbindung zu ermöglichen.

Bevorzugt sind die Muttern durch Setzmuttern gebildet, welche in das Basiselement eingepresst sind. Dadurch ist eine einfache Herstellbarkeit gewährleistet, zumal die Muttern auch automatisiert an den Bohrungen in das Basiselement eingepresst werden können.

Das Basiselement kann grundsätzlich auf verschiedenste Weisen hergestellt werden. Besonders bevorzugt ist vorgesehen, dass das Basiselement durch Laserschneiden aus einem plattenförmigen Bauteil gebildet ist, welches insbesondere aus einem Metall, vorzugsweise einem Stahl, besteht. Üblicherweise weist das Basiselement eine Plattendicke von zumindest 4 mm auf. Alternativ zu einem Stahl kann das Basiselement natürlich auch durch eine Aluminiumplatte oder ein anderes Metall gebildet sein.

Günstig ist es, wenn das Basiselement verzinkt ist. Dadurch ist einer Korrosion auf effektive Weise vorgebeugt.

Bei einem Tragwerk, welches zumindest drei Stäbe aufweist, welche an einem Knotenpunkt über ein Verbindungselement durch Schraubverbindungen verbunden sind, ist erfindungsgemäß vorgesehen, dass das Verbindungselementein Basiselement mit Bohrungen und an diesen Bohrungen vorgesehenen Muttern aufweist, durch welche die Hohlprofile verbunden sind, wobei zumindest ein Hohlprofil an einer Oberseite eine durch Laserschneiden gebildete Ausnehmung aufweist, durch welche das Verbindungselement in das zumindest eine Hohlprofil ragt, wobei das Verbindungselement durch Schrauben mit den Hohlprofilen verbunden ist, welche Schrauben sich durch in Seitenflächen der Hohlprofile angeordnete und mit Bohrungen und Muttern am Verbindungselement korrespondierende Durchgangsbohrungen erstrecken und mit den Muttern an den Bohrungen des Basiselementes verbunden sind, wobei Durchgangsbohrungen und Bohrungen durch Laserschneiden gebildet sind, wobei zumindest zwei Verbindungselement an gegenüberliegenden Seitenflächen des Hohlprofiles vorgesehen sind, welche Verbindungselemente in das Hohlprofil ragen und jeweils kraftschlüssig über Schrauben mit dem Hohlprofil verbunden sind. Das entsprechende Tragwerk kann dann auf besonders einfache Weise hergestellt werden.

Erfindungsgemäß ist vorgesehen, dass die Stäbe durch Hohlprofile gebildet sind. Hohlprofile, wie beispielsweise rohrförmige Profilstähle mit konzentrischem, rechteckigen, ovalem oder einem anderen geschlossenen Querschnitt, weisen ein besonders hohes Flächenträgheitsmoment auf und sind daher günstig, um ein stabiles Tragwerk mit geringem Gewicht zu bilden.

Besonders bevorzugt ist vorgesehen, dass die Stäbe durch Vierkantrohre gebildet sind. Vierkantrohre, also Rohre aus einem beliebigen Werkstoff, vorzugsweise einem Metall, insbesondere Aluminium oder Stahl, haben sich zur Bildung erfindungsgemäßer Tragwerke besonders bewährt, zumal entsprechende Vierkantrohre üblicherweise zwei parallele Seitenflächen aufweisen, welche einfach durch Schraubverbindungen mit plattenförmigen Verbindungselementen verbunden werden können. Es kann somit eine Kraft bei Verwendung von zwei parallelen Verbindungselementen, welche an gegenüberliegenden Seitenflächen am Stab angeordnet werden, vorzugsweise innenseitig, symmetrisch in den Stab eingeleitet werden.

Eine besonders einfache Herstellbarkeit ergibt sich, da erfindungsgemäß zumindest ein Hohlprofil an einer Oberseite eine Ausnehmung aufweist, durch welche das Verbindungselement in das Hohlprofil ragt, wobei das Verbindungselement durch Schrauben mit dem Hohlprofil verbunden ist, welche Schrauben durch eine Seitenfläche des Hohlprofiles ragen. Die Ausnehmung kann ebenfalls vorab in das Hohlprofil eingebracht werden, sodass vor Ort bzw. auf einer Baustelle lediglich die Verbindungselemente in die Ausnehmung eingeführt und durch Schrauben im Hohlprofil fixiert werden müssen, um die Verbindung herzustellen. Nachdem die Muttern bereits am Verbindungselement angebracht sind, müssen hierzu lediglich die Schrauben durch entsprechende Durchgangsbohrungen in den Seitenflächen des Hohlprofiles geführt und in den Muttern fixiert werden. Die Seitenfläche des Hohlprofiles sowie das Basiselement befinden sich dann üblicherweise zwischen dem Schraubenkopf einerseits und der Mutter andererseits, welche Mutter am Basiselement angeordnet ist, üblicherweise als Setzmutter ausgebildet und in das Basiselement eingepresst.

Eine besonders einfache und gleichzeitig genaue Herstellung ergibt sich, zumal erfindungsgemäß die Ausnehmung durch Laserschneiden gebildet ist. Das Verbindungselement sowie die Stäbe können dann einfach und gleichzeitig prozesssicher durch Laserschneiden vorbereitet werden, vorzugsweise mit einer Laserschneidanlage.

Erfindungsgemäß ist vorgesehen, dass das Hohlprofil in der Seitenfläche Durchgangsbohrungen aufweist, welche mit Bohrungen und Muttern am Verbindungselement korrespondieren, wobei das Hohlprofil durch Schrauben mit dem Verbindungselement verbunden ist, welche sich durch die Durchgangsbohrungen erstrecken und mit den Muttern an den Bohrungen verbunden sind.

Erfindungsgemäß ist vorgesehen, dass sämtliche Bohrungen bzw. Durchgangsbohrungen sowohl am Hohlprofil als auch am Verbindungselement durch Laserschneiden gebildet werden. Durch Laserschneiden können die entsprechenden Öffnungen bzw. Bohrungen mit hoher Genauigkeit eingebracht werden, sodass eine entsprechende korrespondierende Anordnung an den Stäben einerseits und am Verbindungselement andererseits gewährleistet werden kann.

Erfindungsgemäß ist vorgesehen, dass zumindest zwei Verbindungselemente an gegenüberliegenden Seitenflächen des Hohlprofiles vorgesehen sind, welche Verbindungselemente in das Hohlprofil ragen und jeweils über Schrauben mit dem Hohlprofil verbunden sind. Dies gewährleistet eine symmetrische Krafteinleitung vom Verbindungselement an den Stab. Auf diese Weise können auch mehrere durch Hohlprofile, insbesondere Vierkantrohre, gebildete Stäbe auf einfache Weise verbunden werden, indem jeweils zwei Verbindungselemente, die parallel sind, mit den einzelnen Stäben verbunden sind. Die Verbindungselemente können dabei durch eine Ausnehmung an einer Oberseite in die Hohlprofile ragen oder endseitig durch offene Stirnflächen in die Hohlprofile ragen, um mit den Hohlprofilen verschraubt zu werden.

Beispielsweise kann vorgesehen sein, dass die Verbindungselemente mit zumindest einem weiteren Stab, welcher durch ein Hohlprofil gebildet ist, verbunden sind, wobei die Verbindungselemente an einer offenen Stirnseite des weiteren Stabes in ein Inneres des Stabes ragen und mit Seitenflächen dieses Stabes verbunden sind. Es ist somit bei diesem weiteren Stab nicht erforderlich, eine Ausnehmung in eine Seitenfläche bzw. eine Oberseite oder eine Unterseite des Stabes einzubringen, sondern können die Verbindungselemente über eine offene Stirnseite in ein Inneres des Stabes eingeführt und an Seitenflächen desselben wiederum über Durchgangsbohrungen an den Seitenflächen des Stabes, welche mit Bohrungen und Muttern am Verbindungselement korrespondieren, verschraubt werden.

Bevorzugt weist das Verbindungselement somit zur Bildung entsprechender Knotenpunkte Koppelbereiche auf, welche sich in Richtungen erstrecken, die Richtungen entsprechen, entlang welcher sich die einzelnen Stäbe vom Knotenpunkt weg erstrecken.

Besonders günstig ist es, wenn sämtliche Stäbe durch Vierkantrohre gebildet sind, um eine günstige Herstellbarkeit zu gewährleisten.

Üblicherweise weisen auch sämtliche Vierkantrohre denselben Querschnitt auf, sodass diese einfach durch fluchtende, plattenförmige Verbindungselemente verschraubt werden können, welche an Innenseiten der Vierkantrohre angeordnet werden.

Bevorzugt ist vorgesehen, dass die Muttern an den Verbindungselementen durch Setzmuttern ausgebildet sind, welche in die Verbindungselemente eingepresst sind.

Die weitere Aufgabe wird erfindungsgemäß durch ein Verfahren nach Anspruch 7 gelöst.

Durch die damit erreichte Vorabanordnung der Muttern an den Bohrungen wird somit ein Verfahrensschritt von der Baustelle zu einer Fertigung der Verbindungselemente verlegt, welche automatisiert vorab erfolgen kann, beispielsweise in einer Fertigungshalle. Dadurch ist eine vereinfachte Herstellung gewährleistet. Üblicherweise wird ein erfindungsgemäßes Tragwerk mit einem erfindungsgemäßen Verfahren hergestellt.

Bevorzugt ist vorgesehen, dass das Basiselement durch Laserschneiden aus einem plattenförmigen Bauteil ausgeschnitten wird.

Die Muttern können grundsätzlich auf jede beliebige Weise mit dem Basiselement verbunden werden, beispielsweise durch Kleben, Schweißen oder dergleichen. Eine besonders einfache Herstellung wird erreicht, wenn die Muttern in das Basiselement eingepresst werden. Dies kann ebenfalls vorab und automatisiert in einer Fertigung erfolgen. Die Muttern sind üblicherweise durch Setzmuttern gebildet.

Erfindungsgemäß ist vorgesehen, dass die Bohrungen in das Basiselement durch Laserschneiden eingebracht werden. Dadurch ist eine hochgenaue und gleichzeitig effiziente Fertigung gewährleistet.

Erfindungsgemäß ist vorgesehen, dass die Verbindungselemente in Ausnehmungen zumindest einiger Stäbe, welche durch Hohlprofile, insbesondere Vierkantrohre, gebildet sind, eingesetzt und in den Stäben mit durch Seitenflächen der Stäbe ragenden Schrauben verschraubt werden. Hierzu sind in den Seitenflächen der Stäbe Durchgangsbohrungen und in den Verbindungselementen korrespondierende Bohrungen vorgesehen, welche mit den Muttern an den Verbindungselementen korrespondieren, um nach einer entsprechenden Positionierung der Stäbe und der Verbindungselemente eine Verbindung durch Einschrauben von mit den Muttern korrespondierenden Schrauben auf einfache Weise erreichen zu können.

Günstig ist es, wenn Verbindungselemente über offene Stirnseiten in zumindest einige Stäbe, welche durch Hohlprofile, insbesondere Vierkantrohre gebildet sind, eingeführt und in den Stäben mit durch Seitenflächen der Stäbe ragenden Schrauben verschraubt werden. Die Verbindungselemente sind üblicherweise einerseits in Ausnehmungen an Ober- bzw. Unterseiten der Hohlprofile und andererseits über Stirnseiten der Hohlprofile in die Hohlprofile eingeführt, um entsprechende Knoten zu bilden. Natürlich kann auch vorgesehen sein, dass die Verbindungselemente ausschließlich über Stirnseiten oder ausschließlich über in Oberseiten der Hohlprofile angeordnete Ausnehmungen in die Hohlprofile eingebracht werden, um innenseitig an den Hohlprofilen angeschraubt zu werden.

Erfindungsgemäß ist vorgesehen, dass die Ausnehmungen an den Stäben durch Laserschneiden gebildet werden. Entsprechend werden bevorzugt auch die Durchgangsbohrungen sowohl an den Stäben als auch die Bohrungen am Basiselement durch Laserschneiden gebildet.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 und 2 einen Stab und ein Verbindungselement;
Fig. 3 eine Mutter;
Fig. 4 einen Stab;
Fig. 5 zwei Stäbe sowie zwei Verbindungselemente eines erfindungsgemäßen Tragwerkes;
Fig. 6 ein Detail eines erfindungsgemäßen Tragwerkes;
Fig. 7 ein weiteres Detail eines erfindungsgemäßen Tragwerkes;
Fig. 8 bis 10 unterschiedliche Prozessschritte bei einem Verbinden von Stäben eines erfindungsgemäßen Tragwerkes.

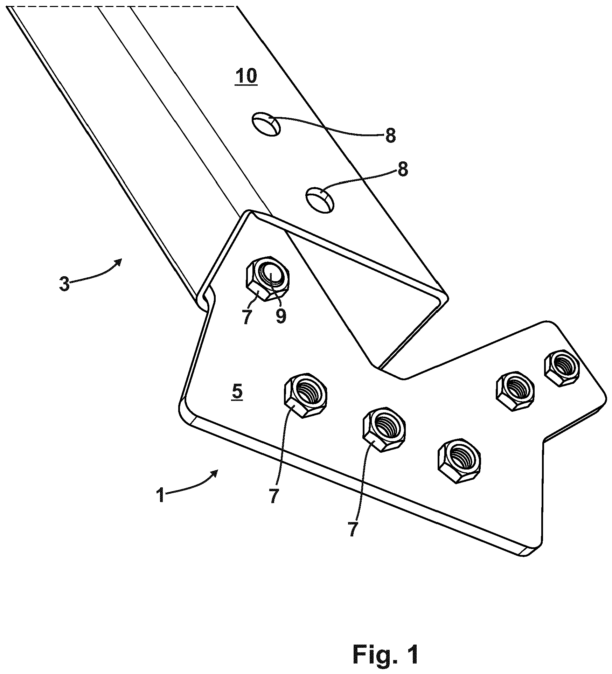

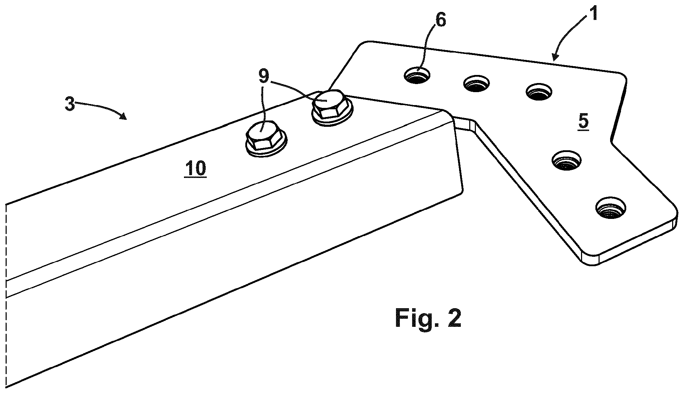

Fig. 1 und 2 zeigen jeweils einen durch ein Vierkantrohr gebildeten Stab 3 und ein Verbindungselement 1 eines erfindungsgemäßen Tragwerkes 2. Wie ersichtlich weist das Verbindungselement 1 ein aus einem Metall, vorzugsweise Stahl oder Aluminium, bestehendes, plattenförmiges Basiselement 5 und sieben daran angeordnete und eingepresste Setzmuttern auf, sodass das Vierkantprofil nach einer Anordnung des Verbindungselementes 1 in einem Inneren des Vierkantprofils über Durchgangsbohrungen 8 im Vierkantprofil einerseits und Bohrungen 6 im Basiselement 5 andererseits, welche an korrespondieren Positionen und koaxial mit den Muttern 7 angeordnet sind, mit dem Verbindungselement 1 verschraubt werden kann. Hierzu wird einfach eine Schraube 9 von außen durch das Vierkantprofil geführt und in die am Basiselement 5 angeordnete Mutter 7 eingeschraubt, wodurch sich eine tragfähige, kraftschlüssige Verbindung zwischen Verbindungselement 1 und Stab 3 ergibt.

Abmessungen des Verbindungselementes 1 korrespondieren dabei mit Innenabmessungen des Vierkantrohres, sodass sich bei einem Einführen des Verbindungselementes 1 in das Vierkantrohr ein flächiger Kontakt wie dargestellt ergibt.

In Fig. 1 und 2 ist ein mit dem Verbindungselement 1 verbundener Stab 3 dargestellt. Es versteht sich, dass über die am Verbindungselement 1 angeordneten Muttern 7 ein zweiter entsprechender Stab 3 sowie ein dritter entsprechender Stab 3 mit dem Verbindungselement 1 verbunden werden können, um einen Knoten eines Tragwerkes 2 zu bilden.

Das dargestellte Verbindungselement 1 weist drei Koppelbereiche auf, sodass ein Knotenpunkt eines Tragwerks 2 gebildet werden kann, welcher drei Stäbe 3 verbindet. Dargestellt ist in Fig. 1 und 2, dass ein Koppelbereich des Verbindungselementes 1 in eine Stirnseite eines Stabes 3 eigeführt ist. Ein weiterer Koppelbereich ist ebenfalls zur stirnseitigen Verbindung mit einem weiteren Stab 3 ausgebildet. Ein dritter Koppelbereich ist zur Einbringung in einen Stab 3 über eine Ausnehmung 4 an einer Oberseite 11 ausgebildet und weist für eine Verbindung mit dem Stab 3 drei Bohrungen 6 mit zugeordneten Muttern 7 auf. Abmessungen der einzelnen Koppelbereiche korrespondieren dabei mit Abmessungen der Stäbe 3, welche über das Verbindungelement verbunden werden soll, wie anhand der dargestellten Verbindung des ersten Koppelbereiches mit einem Stab 3 ersichtlich ist.

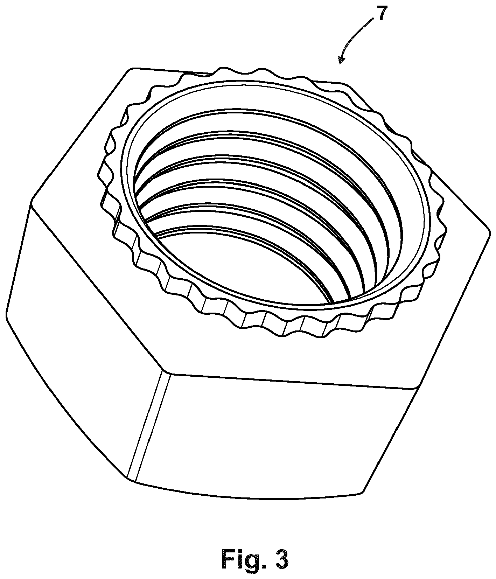

Fig. 3 zeigt eine Setzmutter eines Verbindungselementes 1. Die Setzmutter ist üblicherweise in das Verbindungselement 1 koaxial zu einer korrespondierenden Bohrung 6 eingepresst, sodass sich eine stabile Verbindung zwischen der Mutter 7 und dem Basiselement 5 ergibt, über welche eine Verbindung zwischen dem Verbindungselement 1 und den einzelnen Stäben 3 hergestellt werden kann.

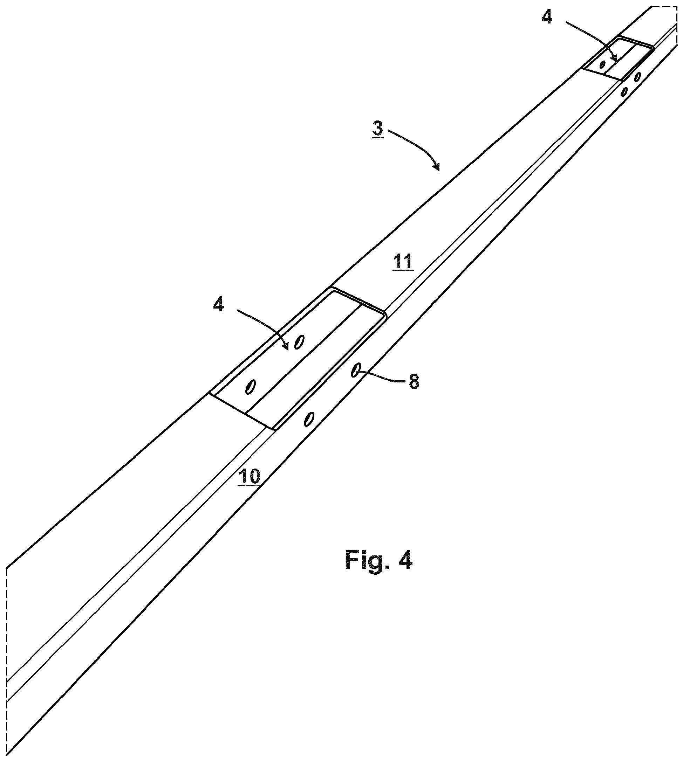

Fig. 4 zeigt schematisch einen weiteren Stab 3 eines erfindungsgemäßen Tragwerkes 2, welcher ebenfalls als Vierkantrohr ausgebildet ist und an einer Oberseite 11 Ausnehmungen 4 aufweist, über welche Verbindungselemente 1 in ein Inneres des Stabes 3 eingebracht werden können. An Seitenflächen 10 des Vierkantrohres sind hier Durchgangsbohrungen 8 vorgesehen, über welche in die Ausnehmungen 4 eingebrachte Verbindungselemente 1 mit dem Vierkantrohr verschraubt werden können, um Knotenpunkte zu bilden.

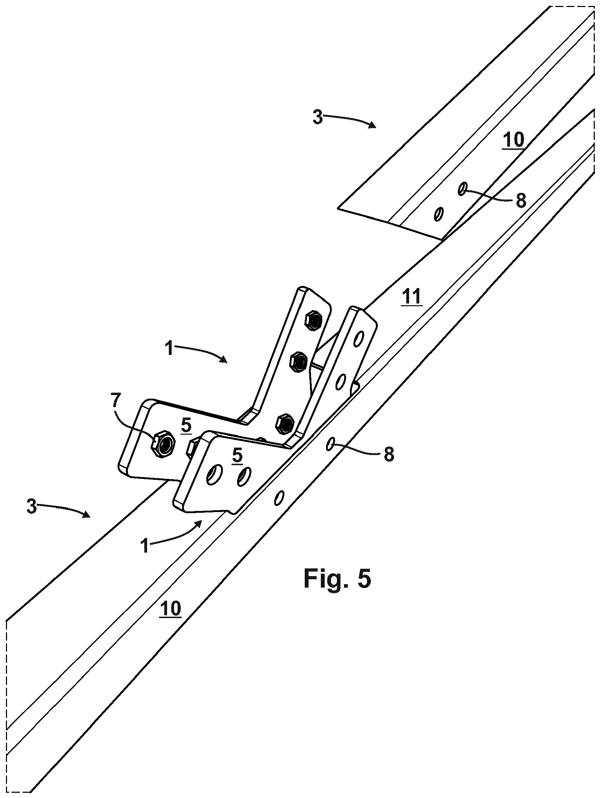

Fig. 5 zeigt einen Stab 3 eines erfindungsgemäßen Tragwerkes 2 entsprechend dem in Fig. 4 dargestellten Stab 3 mit zwei in die Ausnehmung 4 eingesetzten Verbindungselementen 1. Wie ersichtlich sind die Verbindungselemente 1 parallel und flächig an den Seitenflächen 10 des Stabes 3 angeordnet und können nach einem Einsetzen durch von außen zugeführte Schrauben 9 einfach mit dem Stab 3 verschraubt werden. Über die aus der Ausnehmung 4 ragenden Teile der Verbindungselemente 1 können zwei weitere Stäbe 3, welche ebenfalls durch Vierkantrohre gebildet sind, auf entsprechende Weise mit den Verbindungselementen 1 verbunden werden. Ein derartiger Stab 3, welcher ebenfalls entsprechende Durchgangsbohrungen 8 aufweist, die mit Bohrungen 6 und Muttern 7 der Verbindungselemente 1 korrespondieren, ist in Fig. 5 ebenfalls dargestellt.

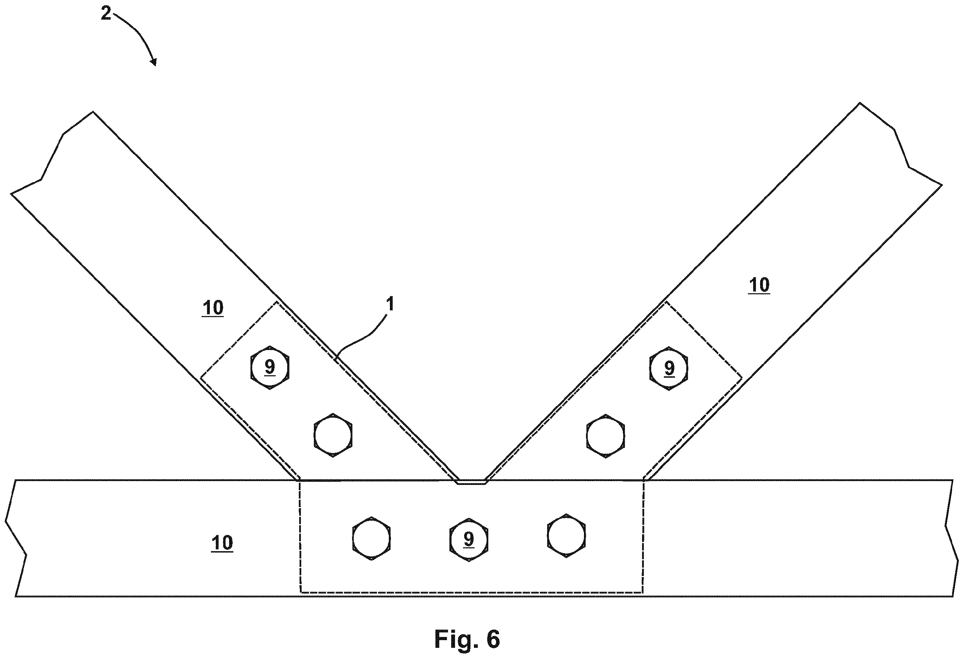

Fig. 6 zeigt schematisch einen Knotenpunkt eines entsprechenden Tragwerkes 2, wobei ein Verbindungselement 1 wiederum an einer Unterseite mit einem durch ein Vierkantrohr gebildeten Stab 3 verbunden ist, indem das Verbindungselement 1 über eine Ausnehmung 4 in einer Oberseite 11 in den Stab 3 eingebracht ist, also analog zu der in Fig. 5 dargestellten Ausführungsvariante.

Zwei weitere Stäbe 3 sind ebenfalls als Vierkantrohre ausgebildet und oberhalb mit dem strichliert dargestellten Verbindungselement 1 verbunden, indem Koppelbereiche des Verbindungselementes 1 über offene Stirnseiten in diese Stäbe 3 eingebracht und innenseitig mit den Stäben 3 durch von außen zugeführte Schrauben 9 verschraubt sind.

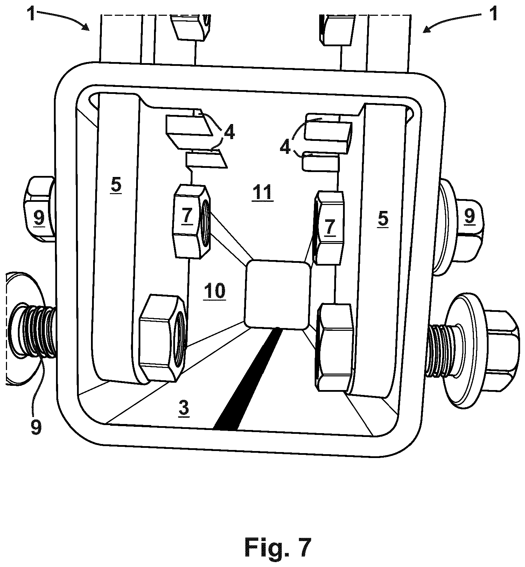

Fig. 7 zeigt ein Detail eines erfindungsgemäßen Tragwerkes 2 etwa entlang einer Längsachse eines Stabes 3 des Tragwerkes 2. Über eine offene Stirnseite dieses auch hier als Vierkantrohr ausgebildeten Stabes 3 ist ersichtlich, dass zwei Verbindungselemente 1 durch Ausnehmungen 4 in einer Oberseite 11 des Stabes 3 in ein Inneres des Stabes 3 ragen, die etwa parallel sind. Die Verbindungselemente 1 werden wie dargestellt durch Schrauben 9 mit dem Stab 3 verbunden, wobei auch hier die Schrauben 9 durch Seitenflächen 10 des Stabes 3 ragen und mit Muttern 7, die hier ebenfalls als Setzmuttern ausgebildet und in Basiselemente 5 der Verbindungselemente 1 eingepresst sind, verschraubt werden. Über die zwei aus der Oberseite 11 des Stabes 3 ragenden Verbindungselemente 1 kann ein weiterer, nicht dargestellter Stab 3 an zwei gegenüberliegenden Seitenflächen 10 mit dem dargestellten Stab 3 verbunden werden, indem dieser weitere Stab 3 beispielsweise stirnseitig auf die aus der Oberseite 11 des Stabes 3 ragenden Teile der Verbindungselemente 1 aufgesteckt wird, wonach der weitere Stab 3 in analoger Weise mit den Verbindungselementen 1 verschraubt wird.

Die Ausnehmungen 4 in der Oberseite 11 des Stabes 3 sind hier wie dargestellt an eine in ein Inneres des Stabes 3 einzuführende Kontur des Verbindungselementes 1 angepasst, sodass die Ausnehmungen 4 auch Aussparungen für die Muttern 7 aufweisen.

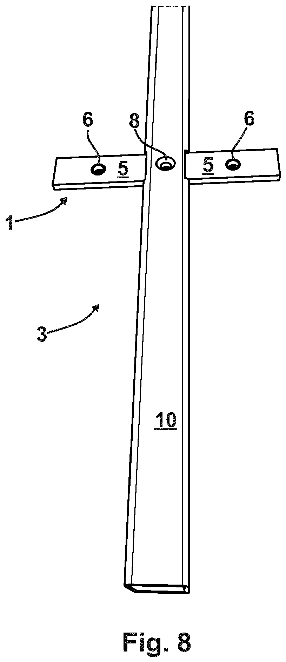

Fig. 8 bis 10 zeigen aufeinanderfolgende Prozessschritte bei einem Verfahren zum Verbinden von Stäben 3 eines Tragwerkes 2 mit einem Verbindungselement 1.

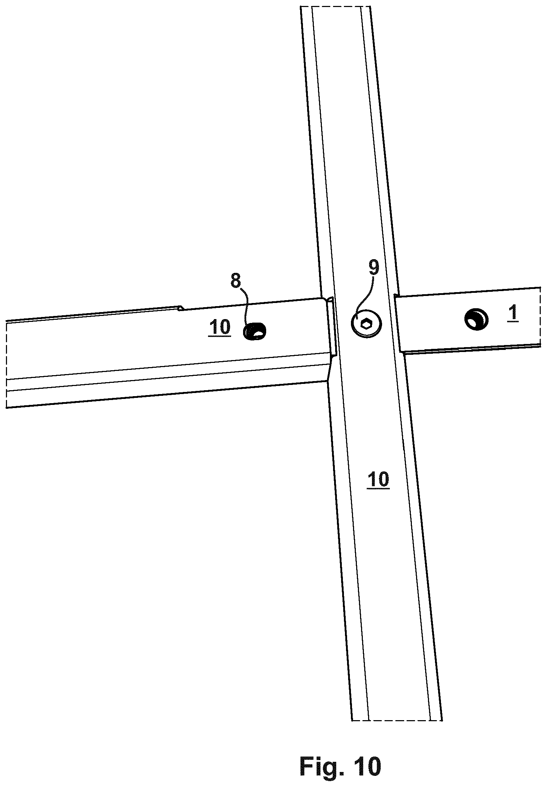

Wie ersichtlich weist der in Fig. 8 bis 10 dargestellte Stab 3 zwei gegenüberliegende Ausnehmungen 4 auf, durch welche ein Verbindungselement 1 beidseits aus dem Stab 3 ragt, welcher auch hier als Vierkantrohr ausgebildet ist. Das Verbindungselement 1 hat etwa eine Quaderform, sodass dieses von einer Seite durch beide Ausnehmungen 4 des Stabes 3 geführt werden kann, um die in Fig. 10 dargestellte Position zu erreichen. Das Verbindungselement 1 weist drei Bohrungen 6 und auf einer nicht dargestellten Unterseite drei mit den Bohrungen 6 korrespondierende Muttern 7 auf, welche auch hier als Setzmuttern ausgebildet und in ein Basiselement 5 des Verbindungselementes 1 eingepresst sind.

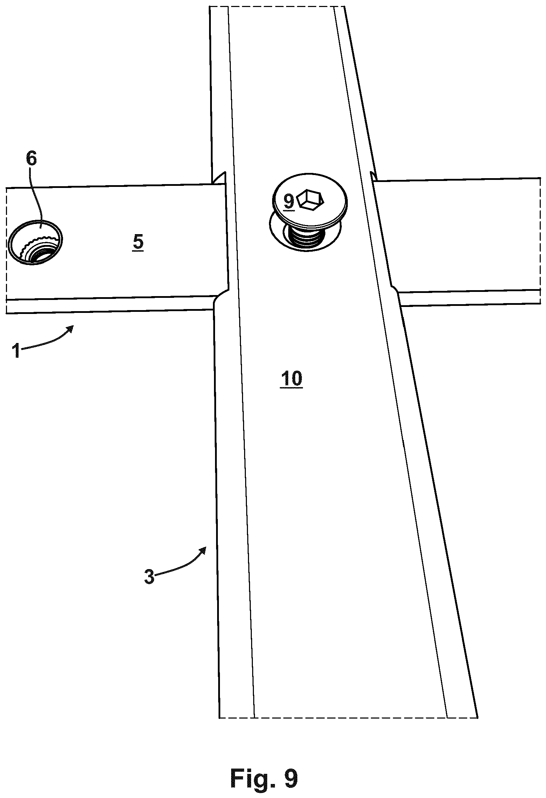

Eine mittige Bohrung 6, an welcher ebenfalls eine Mutter 7 angeordnet ist, ist in Fig. 8 an einer mit einer Durchgangsbohrung 8 im Stab 3 korrespondieren Position angeordnet, sodass der Stab 3 wie in Fig. 9 dargestellt mittels einer Schraube 9, welche in die Durchgangsbohrung 8 eingeführt wird, mit dem teilweise im Stab 3 befindlichen Verbindungselement 1 verschraubt werden kann.

Im Unterschied zu den in den Fig. 1 bis 7 dargestellten Ausführungsbeispielen ist die Schraube 9 hier als Senkschraube ausgebildet. Natürlich sind auch Ausführungen mit jeglichen anderen Schraubenformen möglich.

Fig. 10 zeigt eine Situation, in welcher auf einen aus dem in Fig. 8 und 9 dargestellten Stab 3 ragenden Teil des Verbindungselementes 1 ein weiterer Stab 3 aufgesteckt ist. Auch dieser weitere Stab 3 weist eine Durchgangsbohrung 8 auf, um mittels einer Schraube 9, welche durch die Durchgangsbohrung 8 geführt wird, mit dem Verbindungselement 1 und somit dem zweiten Stab 3 verbunden zu werden.

Es versteht sich, dass an einer der dargestellten, hier oben liegenden Seitenfläche 10 des Stabes 3 gegenüberliegenden, unteren Seitenfläche 10 ein weiteres, entsprechendes Verbindungselement 1 vorgesehen sein kann, um drei rechtwinkelig zueinander angeordnete Träger über jeweils zwei Verbindungselemente 1, welche an gegenüberliegenden Seitenflächen 10 der Träger angeordnet sind, zu verbinden.

Ein derartiges Verbindungselement 1 ermöglicht die Herstellung von Tragwerken 2 auf besonders einfache und gleichzeitig prozesssichere Weise. Insbesondere wenn die Verbindungselemente 1 durch Laserschneiden zugeschnitten und die Bohrungen 6 durch Laserschneiden eingebracht werden, ist auch eine hohe Genauigkeit bei geringen Kosten gewährleistet. Mit einem erfindungsgemäßen Verfahren können entsprechende Tragwerke 2 auf besonders schnelle und gleichzeitig robuste Weise hergestellt werden.

## Patentansprüche

1. Tragwerk (2), aufweisend zumindest drei durch Hohlprofile gebildete Stäbe (3), welche an einem Knotenpunkt über ein Verbindungselement (1), welches ein Basiselement mit Bohrungen (6) und an diesen Bohrungen (6) vorgesehenen Muttern (7) aufweist, verbunden sind, wobei zumindest ein Hohlprofil an einer Oberseite (11) eine durch Laserschneiden gebildete Ausnehmung (4) aufweist, durch welche das Verbindungselement (1) in das zumindest eine Hohlprofil ragt, wobei das Verbindungselement (1) durch Schrauben (9) mit den Hohlprofilen verbunden ist, welche Schrauben (9) sich durch in Seitenflächen (10) der Hohlprofile angeordnete und mit Bohrungen (6) und Muttern (7) am Verbindungselement (1) korrespondierende Durchgangsbohrungen (8) erstrecken und mit den Muttern (7) an den Bohrungen (6) des Basiselementes verbunden sind, wobei Durchgangsbohrungen (8) und Bohrungen (6) durch Laserschneiden gebildet sind, wobei zumindest zwei Verbindungselemente (1) an gegenüberliegenden Seitenflächen (10) des Hohlprofiles vorgesehen sind, welche Verbindungselemente (1) in das Hohlprofil ragen und jeweils kraftschlüssig über Schrauben (9) mit dem Hohlprofil verbunden sind.

2. Tragwerk (2) nach Anspruch 1, **dadurch gekennzeichnet, dass** die Stäbe (3) durch Vierkantrohre, gebildet sind.

3. Tragwerk (2) nach Anspruch 1 oder 2, **dadurch gekennzeichnet, dass** die Muttern (7) durch Setzmuttern gebildet sind, welche in das Basiselement (5) eingepresst sind.

4. Tragwerk (2) nach einem der Ansprüche 1 bis 3, **dadurch gekennzeichnet, dass** die Verbindungselemente (1) mit zumindest einem weiteren Stab (3), welcher durch ein Hohlprofil gebildet ist, verbunden sind, wobei die Verbindungselemente (1) an einer offenen Stirnseite des weiteren Stabes (3) in ein Inneres des Stabes (3) ragen und mit Seitenflächen (10) dieses Stabes (3) verbunden sind.

5. Tragwerk (2) nach einem der Ansprüche 1 bis 4, **dadurch gekennzeichnet, dass** sämtliche Stäbe (3) durch Vierkantrohre gebildet sind.

6. Tragwerk (2) nach einem der Ansprüche 1 bis 5, **dadurch gekennzeichnet, dass** das Basiselement (5) durch Laserschneiden aus einem plattenförmigen Bauteil gebildet ist, welches insbesondere aus einem Metall, vorzugsweise einem Stahl, besteht.

7. Verfahren zur Herstellung eines Tragwerkes (2), welches zumindest drei Stäbe (3), welche an einem Knotenpunkt über ein Verbindungselement (1) durch Schraubverbindungen verbunden sind, aufweist, **dadurch gekennzeichnet, dass** das Verbindungselement (1) gebildet wird, indem ein Basiselement (5) mit Bohrungen (6) bereitgestellt wird, wonach an den Bohrungen (6) Muttern (7) angeordnet werden, wonach die Stäbe (3) mit Schrauben (9) am Verbindungselement (1) befestigt werden, welche in die Muttern (7) eingeschraubt werden, wobei ein Tragwerk (2) nach einem der Ansprüche 1 bis 6 hergestellt wird.

8. Verfahren nach Anspruch 7, **dadurch gekennzeichnet, dass** das Basiselement (5) durch Laserschneiden aus einem plattenförmigen Bauteil ausgeschnitten wird.

9. Verfahren nach Anspruch 7 oder 8, **dadurch gekennzeichnet, dass** die Muttern (7) in das Basiselement (5) eingepresst werden.

10. Verfahren nach einem der Ansprüche 7 bis 9, **dadurch gekennzeichnet, dass** die Verbindungselemente (1) in Ausnehmungen (4) zumindest einiger Stäbe (3), welche durch Hohlprofile, insbesondere Vierkantrohre, gebildet sind, eingesetzt und in den Stäben (3) mit durch Seitenflächen (10) der Stäbe (3) ragenden Schrauben (9) verschraubt werden, wobei die Ausnehmungen (4) bevorzugt durch Laserschneiden gebildet werden.

11. Verfahren nach einem der Ansprüche 7 bis 10, **dadurch gekennzeichnet, dass** Verbindungselemente (1) über offene Stirnseiten in zumindest einige Stäbe (3), welche durch Hohlprofile, insbesondere Vierkantrohre, gebildet sind, eingeführt und in den Stäben (3) mit durch Seitenflächen (10) der Stäbe (3) ragenden Schrauben (9) verschraubt werden.

## Claims

1. A supporting structure (2), comprising at least three bars (3) formed by hollow profiles, which are connected at a junction point via a connecting element (1) which has a base element with holes (6) and nuts (7) provided at these holes (6), wherein at least one hollow profile has on an upper side (11) a recess (4) formed by laser cutting through which the connecting element (1) projects into the at least one hollow profile, wherein the connecting element (1) is connected to the hollow profiles by screws (9), which screws (9) extend through through-holes (8) which are arranged in side faces (10) of the hollow profiles and correspond to bores (6) and nuts (7) on the connecting element (1) and are connected to the nuts (7) at the holes (6) of the base element, wherein through-holes (8) and holes (6) are formed by laser cutting, wherein at least two connecting elements (1) are provided on opposite side faces (10) of the hollow profile, which connecting elements (1) project into the hollow profile and are each connected to the hollow profile in a force-fitting manner via screws (9) .

2. The supporting structure (2) according to claim 1, **characterized in that** the bars (3) are formed by square tubes.

3. The supporting structure (2) according to claim 1 or 2, **characterized in that** the nuts (7) are formed by press nuts which are pressed into the base element (5).

4. The supporting structure (2) according to any one of claims 1 to 3, **characterized in that** the connecting elements (1) are connected to at least one further bar (3) which is formed by a hollow profile, wherein the connecting elements (1) project at an open end face of the further bar (3) into an interior of the bar (3) and are connected to side faces (10) of this bar (3).

5. The supporting structure (2) according to any one of claims 1 to 4, **characterized in that** all bars (3) are formed by square tubes.

6. The supporting structure (2) according to any one of claims 1 to 5, **characterized in that** the base element (5) is formed by laser cutting from a plate-shaped component which in particular consists of a metal, preferably a steel.

7. A method for producing a supporting structure (2) which comprises at least three bars (3) which are connected at a junction point via a connecting element (1) by screw connections, **characterized in that** the connecting element (1) is formed by providing a base element (5) with holes (6), whereupon nuts (7) are arranged at the bores (6), whereupon the bars (3) are fastened to the connecting element (1) by means of screws (9) which are screwed into the nuts (7), wherein a supporting structure (2) is produced according to any one of claims 1 to 6.

8. The method according to claim 7, **characterized in that** the base element (5) is cut out of a plate-shaped component by laser cutting.

9. The method according to claim 7 or 8, **characterized in that** the nuts (7) are pressed into the base element (5).

10. The method according to any one of the claims 7 to 9, **characterized in that** the connecting elements (1) are inserted into recesses (4) of at least some bars (3) which are formed by hollow profiles, in particular square tubes, and are screwed in place in the bars (3) by means of screws (9) projecting through side faces (10) of the bars (3), wherein the recesses (4) are preferably formed by laser cutting.

11. The method according to any one of the claims 7 to 10, **characterized in that** connecting elements (1) are inserted via open end faces into at least some bars (3) which are formed by hollow profiles, in particular square tubes, and are screwed in place in the bars (3) by means of screws (9) projecting through side faces (10) of the bars (3).

## Revendications

1. Structure porteuse (2), comportant au moins trois barres (3) constituées de profilés creux, lesquels sont assemblés sur un point nodal par l'intermédiaire d'un élément d'assemblage (1), lequel comporte un élément de base doté de perçages (6) et d'écrous (7) prévus sur lesdits perçages (6), au moins un profilé creux comportant sur une face supérieure (11) un évidement (4) constitué par découpe au laser, à travers lequel l'élément d'assemblage (1) saillit dans l'au moins un profilé creux, l'élément d'assemblage (1) étant assemblé par des vis (9) avec les profilés creux, lesquelles vis (9) s'étendent à travers des perçages traversants (8) placés dans des surfaces latérales (10) des profilés creux et correspondant avec des perçages (6) et des écrous (7) sur l'élément d'assemblage (1) et sont assemblées par les écrous (7) sur les perçages (6) de l'élément de base, des perçages traversants (8) et des perçages (6) étant créés par découpe au laser, au moins deux éléments d'assemblage (1) étant prévus sur des surfaces latérales (10) opposées du profilé creux, lesquels éléments d'assemblage (1) saillant dans le profilé creux et étant assemblés chacun par complémentarité de force par l'intermédiaire de vis (9) avec le profilé creux.

2. Structure porteuse (2) selon la revendication 1, **caractérisée en ce que** les barres (3) sont constituées de tubes carrés.

3. Structure porteuse (2) selon la revendication 1 ou 2, **caractérisée en ce que** les écrous (7) sont constitués par des écrous à sertir, lesquels sont emmanchés dans l'élément de base (5).

4. Structure porteuse (2) selon l'une quelconque des revendications 1 à 3, **caractérisée en ce que** les éléments d'assemblage (1) sont assemblés avec au moins une barre (3) supplémentaire, laquelle est constituée par un profilé creux, les éléments d'assemblage (1) saillant sur une face frontale ouverte de la barre (3) supplémentaire dans un intérieur de la barre (3) et étant assemblés avec des surfaces latérales (10) de ladite barre (3).

5. Structure porteuse (2) selon l'une quelconque des revendications 1 à 4, **caractérisée en ce que** toutes les barres (3) sont constituées de tubes carrés.

6. Structure porteuse (2) selon l'une quelconque des revendications 1 à 5, **caractérisée en ce que** l'élément de base (5) est constitué par découpe au laser à partir d'un élément en forme de plaque, lequel consiste notamment en un métal, de préférence en un acier.

7. Procédé, destiné à fabriquer une structure porteuse (2), laquelle comporte au moins trois barres (3), lesquelles sont assemblées sur un point nodal par l'intermédiaire d'un élément d'assemblage (1) par des raccords vissés, **caractérisé en ce que** l'on constitue l'élément d'assemblage (1) en mettant à disposition un élément de base (5) doté de perçages (6), suite à quoi l'on place des écrous (7) sur des perçages (6), suite à quoi l'on fixe les barres (3) sur l'élément d'assemblage (1) à l'aide de vis (9), que l'on visse dans les écrous (7), une structure porteuse (2) selon l'une quelconque des revendications 1 à 6 étant fabriquée.

8. Procédé selon la revendication 7, **caractérisé en ce que** l'on découpe l'élément de base (5) par découpe au laser à partir d'un élément en forme de plaque.

9. Procédé selon la revendication 7 ou 8, **caractérisé en ce que** l'on emmanche les écrous (7) dans l'élément de base (5).

10. Procédé selon l'une quelconque des revendications 7 à 9, **caractérisé en ce que** l'on insère les éléments d'assemblage (1) dans des évidements (4) d'au moins quelques barres (3), lesquelles sont constituées de profilés creux, notamment de tubes carrés, et **en ce qu'**on les visse dans les barres (3) à l'aide de vis (9) saillant à travers des surfaces latérales (10) des barres (3), les évidements (4) étant constitués de préférence par découpe au laser.

11. Procédé selon l'une quelconque des revendications 7 à 10, **caractérisé en ce que** l'on introduit des éléments d'assemblage (1) par l'intermédiaire de faces frontales ouvertes dans au moins certaines barres (3), lesquelles sont constituées de profilés creux, notamment de tubes carrés, et **en ce qu'**on les visse dans les barres (3) à l'aide de vis saillant à travers des surfaces latérales (10) des barres (3).
